# EUROPÄISCHE PATENTSCHRIFT

(11) **EP 3 429 885 B1**
(45) Veröffentlichungstag und Bekanntmachung des Hinweises auf die Patenterteilung: **12.08.2020**
(21) Anmeldenummer: 17708793.9
(22) Anmeldetag: 06.03.2017
(51) Int. Cl.: B60L 3/04, H01H 39/00

(54) **DC-ÜBERSTROMSCHUTZVORRICHTUNG**
DC OVERCURRENT PROTECTION APPARATUS
DISPOSITIF DE PROTECTION CC CONTRE LES SURINTENSITÉS DE COURANT

(30) Priorität: 16.03.2016 DE 102016204287
(43) Veröffentlichungstag der Anmeldung: 23.01.2019
(73) Patentinhaber: Bayerische Motoren Werke Aktiengesellschaft, 80809 München (DE)
(72) Erfinder: WAAG, Wladislaw, 80992 München (DE)
(86) Internationale Anmeldenummer: PCT/EP2017/055130
(87) Internationale Veröffentlichungsnummer: WO 2017/157704

(56) Entgegenhaltungen:
- DE-A1- 10 132 750
- DE-A1-102008 044 774
- DE-A1-102012 214 835
- DE-A1-102012 215 074
- DE-C- 954 178

## Beschreibung

### Technisches Gebiet

Die Erfindung betrifft eine DC-Überstromschutzvorrichtung, die ein zündstromgesteuertes Irreversibel-Hochstromabschaltelement, eine Überstromdetektionseinheit und Steuerkontakte zum Steuern des zündstromgesteuerten Irreversibel-Hochstromabschaltelements umfasst.

### Beschreibung

Es existieren viele Applikationen, bei denen ein Gleichstrom, auch DC-Strom genannt, auf einen maximalen Wert begrenzt werden muss, um Komponenten im Überlast- oder Kurzschlussfall gegen einen Überstrom zu schützen. Ein Beispiel ist das Hochvolt-Bordnetz in einem Elektro- oder Hybridfahrzeug. In diesem Beispiel werden üblicherweise zwei Schütze und eine Sicherung in einem Hochvoltspeicher eingebaut. Die Schütze trennen den Hochvoltspeicher von anderen Komponenten im Fahrzeug im normalen Betreib sowie bei kleineren Überlastströmen. Die Sicherung übernimmt das Trennen bei hohen Überlast- und Kurzschlussströmen. Der Nachteil einer konventionellen Sicherung besteht darin, dass sie nach dem thermischen Prinzip funktioniert und dadurch eine lange stromabhängige Zeit braucht, um den Stromfluss zu trennen. Dadurch ist sie bei nicht zu hohen Strömen eventuell nicht schnell genug ist, um die Komponenten im Fahrzeug gegen Überlast zu schützen.

Deswegen existieren bereits Konzepte, bei denen man zusätzlich zu konventionellen Schaltelementen (Schütz, Sicherung) ein pyrotechnisches Abschaltelement verwendet. Ein Zündelement (auch als Zündpille bekannt) des pyrotechnischen Abschaltelements wird mit einem Stromsignal gezündet und bewirkt das Abtrennen des Hochstrompfades. Das Zündsignal wird durch eine Überwachungselektronik erzeugt, die den zu überwachenden Hochstrom misst und das Zündsignal erzeugt, sobald
der Strom im Hochvoltnetz einen maximal zulässigen Wert überschreitet.

Diese Art der Ansteuerung des pyrotechnischen Abschaltelements hat folgende Nachteile: Die Strommessschaltung kann gestört werden und die Störung kann ein Fehlauslösen bewirken oder umgekehrt ein Nichtauslösen bei Überstrom bewirken. Die Strommessschaltung mit Zündelektronik kann einen komplexen Aufbau aufweisen und eine hohe Ausfallrate besitzen. Die Strommessschaltung braucht zum Funktionieren immer Energie und erhöht somit den Stromverbrauch, wenn sie nicht komplett deaktiviert ist.

Aus der DE 954 178 C ist eine DC-Überstromschutzvorrichtung gemäß dem Oberbegriff von Anspruch 1 bekannt.

Weiterer Stand der Technik wird durch die DE 10 2012 214835 A1, DE 10 2008 044774 A1, DE 101 32 750 A1 und die DE 10 2012 215074 A1 gebildet.

Der vorliegenden Erfindung liegt die Aufgabe zu Grunde, die vorgenannten Nachteile des Standes der Technik zu verringern oder zu vermeiden. Insbesondere soll eine DC-Überstromschutzvorrichtung zur Verfügung gestellt werden, die zur Vermeidung von Fehlauslösen unempfindlich gegenüber Störungen, insbesondere elektromagnetischen Störungen, ist, keinen dauerhaften Stromverbrauch verursacht, eine geringe Ausfallrate aufweist und auf einen Überstrom schnell reagiert.

Erfindungsgemäß wird die voranstehende Aufgabe mit den Merkmalen der unabhängigen Ansprüche gelöst. Vorteilhafte Ausführungen sind Gegenstände von Unteransprüchen.

Die erfindungsgemäße DC-Überstromschutzvorrichtung umfasst ein zündstromgesteuertes Irreversibel-Hochstromabschaltelement, eine Überstromdetektionseinheit, die elektrisch in einem Hochstrompfad in Reihe mit dem zündstromgesteuerten Irreversibel-Hochstromabschaltelement geschaltet ist, und Steuerkontakte zum Steuern des zündstromgesteuerten Irreversibel-Hochstromabschaltelements, die elektrisch verbindbar zueinander angeordnet sind. Die Überstromdetektionseinheit ist so ausgebildet, dass, wenn ein Überstrom mit einem Wert gleich oder größer als ein vorbestimmter Stromwert in dem Hochstrompfad fließt, die Steuerkontakte aufgrund einer durch den Über strom bewirkten elektromagnetischen Kraft derart elektrisch miteinander verbunden werden, dass ein Zündstrom an das zündstromgesteuerte Irreversibel-Hochstromabschaltelement übertragen wird, so dass das zündstromgesteuerte Irreversibel-Hochstromabschaltelement in einen Abschaltzustand gesteuert wird.

Das zündstromgesteuerte Irreversibel-Hochstromabschaltelement ist in einer Ausführungsform der Erfindung ein pyrotechnisches Abschaltelement. Im Folgenden wird unter einem Normalstrom ein Strom mit einem Wert im Bereich von ca. 1000 Ampere (im Folgenden mit A abgekürzt) bis ca. 1500 A verstanden. Ströme größer oder gleich ca. 1500 A und kleiner ca. 3000 A können mit einem Schütz reversibel geschaltet werden. Unter dem Hochstrompfad wird ein elektrischer Pfad verstanden, der hohe Ströme mit Werten von größer oder gleich ca. 1500 A bis kleiner ca. 3000 A führt. Derartige Ströme können in einer Ausführungsform in einem Hochvoltbordnetz, das Spannungen zwischen ca. 400 Volt und ca. 800 Volt führt, eines Fahrzeugs, insbesondere eines Elektro-, Hybrid-, oder Fuel-Cell-Fahrzeugs auftreten. Oberhalb von ca. 3000 A kann ein Überstrom vorliegen, so dass in einer Ausführungsform der vorbestimmte Stromwert in dem Hochstrompfad bei ca. 3000 A, insbesondere 3000 A, liegt.

Die durch den Überstrom bewirkte elektromagnetische Kraft kann beispielsweise die Lorentzkraft sein. Unter der elektromagnetischen Kraft wird auch die Kraft verstanden, die bei einem elektrischen Stromfluss an jeder Kontaktierung im Hochstrompfad dazu führt, dass sich zumindest teilweise gegenüberliegende und berührende Hochstromkontaktelemente der gegebenen Kontaktierung aufgrund des Stromflusses voneinander abstoßen. Diese abstoßende Kraft tritt auf, wenn der Strom in einem der beiden Kontaktelemente in eine Richtung quer zu einer Kontaktfläche dieses Kontaktelementes und in dem anderen der beiden Kontaktelemente in eine andere Richtung quer zu einer Kontaktfläche des anderen Kontaktelementes fließt. Die teilweise oder vollständig einander entgegen gerichteten, zumindest jedoch richtungsgeänderten Teilströme des durch die Kontaktierung fließenden Stroms erzeugen eine abstoßende Kraft an den Kontaktflächen der Hochstromkontaktelemente der gegebenen Kontaktierung. Diesen Effekt in DC-Kontakten nennt man auch elektromagnetische Levitation.

Die erfindungsgemäße Vorrichtung ist nicht empfindlich gegenüber Störungen, insbesondere gegenüber elektromagnetischen Störungen, die eine Strommessung beeinträchtigt können, aber nicht genug Energie besitzen, um eine elektromagnetische Kraft mit einem Betrag und über eine Zeitdauer zu erzeugen, die ausreichen, die Steuerkontakte elektrisch miteinander zu verbinden. Dadurch wird ein Fehlauslösen des Irreversibel-Hochstromabschaltelements durch derartige elektromagnetische Störungen verhindert.

Die bei einem Hochstrom unterhalb eines Überstroms voneinander getrennten, d.h. offenen Steuerkontakte werden aufgrund einer durch den Überstrom bewirkten elektromagnetischen Kraft elektrisch miteinander verbunden werden, d.h. kurzgeschlossen oder mit einer Energiequelle zur Erzeugung des Zündstroms verbunden, um den Zündstrom an das zündstromgesteuerte Irreversibel-Hochstromabschaltelement zu übertragen. Die für das Auslösen der Übertragung des Zündstroms benötigte elektrische Energie wird also dem Hochstrompfad nur dann entnommen, wenn ein Überstrom vorliegt. Daher weist die erfindungsgemäße Vorrichtung keinen dauerhaften Stromverbrauch auf. Ausführungsformen, die mit Bezug auf nachfolgende Figuren erklärt werden, zur Erzeugung der durch den Überstrom bewirkten elektromagnetischen Kraft zur elektrischen Verbindung der Steuerkontakte miteinander lassen sich ohne den Einsatz elektronischer Bauelemente realisieren, so dass eine Ausfallrate der Vorrichtung sehr gering und im Vergleich zu konventionellen Vorrichtungen verringert ist. Aufgrund des einfachen Aufbaus der erfindungsgemäßen Vorrichtung zur Verwendung des Überstroms zur Übertragung des Zündstroms an das Irreversibel-Hochstromabschaltelement reagiert die Vorrichtung sehr schnell und schneller als konventionelle Vorrichtungen.

In einer Ausführungsform der Erfindung umfasst die Überstromdetektionseinheit ein Halteelement, das zwischen einem Wandungsabschnitt der Überstromdetektionseinheit und einem gegenüber dem Wandungsabschnitt bewegbaren Permanentmagnet angeordnet ist, der mit einer Haltekraft des Halteelements in Richtung des Wandungsabschnitts gehalten wird und an dem ein erster Steuerkontakt befestigt ist. Der Hochstrompfad ist um den Permanentmagnet gewickelt und die Überstromdetektionseinheit ist so ausgebildet ist, dass, wenn der Überstrom im Hochstrompfad fließt, der Permanentmagnet sich gegen die Haltekraft des Halteelements derart bewegt, dass der erste Steuerkontakt einen zweiten, gegenüber dem Wandungsabschnitt ortsfesten Steuerkontakt berührt. Hierdurch wird der erste Steuerkontakt mit dem zweiten Steuerkontakt kurzgeschlossen wird, so dass durch eine an den zweiten Steuerkontakt angeschlossene Energiequelle der Zündstrom an das zündstromgesteuerte Irreversibel-Hochstromabschaltelement übertragen wird.

Der Aufbau zum Kurzschließen der Steuerkontakte ist denkbar einfach und umfasst lediglich eine Wicklung des Hochstrompfades, den Permanentmagnet und ein Halteelement. Daher ist diese erfindungsgemäße DC-Überstromschutzvorrichtung sehr ausfallsicher, zuverlässig und löst bei einem Überstrom schnell aus. Energie wird dem Hochstrompfad nur bei Auftreten eines Überstroms entnommen, weshalb die Vorrichtung wenig Strom verbraucht. Die Überstromdetektionseinheit ist in dieser Ausführungsform vollständig reversibel, d.h. sie kann nach einem aufgetretenen Überstrom ohne Änderung wiederverwendet werden, und daher zuverlässig und wartungsarm.

Lediglich eine Selbstentladung der Energiequelle zur Erzeugung des Zündstroms muss ab und zu kompensiert werden. Als Energiequelle kann ein Kondensator, ein Doppelschichtkondensator, eine Batterie, eine das vor einem Überstrom zu schützende Bordnetz versorgende Hochvoltbatterie selbst oder Ähnliches verwendet werden. Gegebenenfalls kann eine Ladeschaltung implementiert werden, welche die Energiequelle periodisch oder bei Abfall auf einen Minimalenergiewert, der für eine Aufrechterhaltung des Betriebs der Energiequelle erforderlich ist, nachlädt, um eine Selbstentladung zu kompensieren.

In dieser Ausführungsform sind die Steuerkontakte von der Überstromdetektionseinheit umfasst. Es sind aber auch Ausführungsformen denkbar, in denen der Permanentmagnet aus einem Gehäuse der Überstromdetektionseinheit herausgeführt ist und der erste und/oder zweite Steuerkontakt außerhalb der Überstromdetektionseinheit angeordnet sind/ist.

Die Wicklung kann derart ausgeführt sein, dass der Hochstrompfad eine Induktivität umfasst, die mindestens eine Schlaufe umfasst.

In einer weiteren Ausführungsform der Erfindung umfasst die Überstromdetektionseinheit ein Halteelement, das zwischen einem Wandungsabschnitt der Überstromdetektionseinheit und einem hochstromleitenden, gegenüber dem Wandungsabschnitt bewegbaren Bügel angeordnet ist, an dem ein erster Steuerkontakt befestigt ist. Der Bügel wird mit einer Haltekraft des Halteelements in Richtung des Wandungsabschnitts so gehalten, dass ein Stromfluss in dem Hochstrompfad durch den Bügel geführt wird und der Bügel einen Teil des Hochstrompfades bildet. Die Überstromdetektionseinheit ist so ausgebildet, dass, wenn der Überstrom im Hochstrompfad fließt, der Bügel sich gegen die Haltekraft des Halteelements derart bewegt, dass der erste Steuerkontakt einen zweiten, gegenüber dem Wandungsabschnitt ortsfesten Steuerkontakt berührt, wodurch der erste Steuerkontakt mit dem zweiten Steuerkontakt kurzgeschlossen wird. Durch den Kurzschluss wird durch eine an den zweiten Steuerkontakt angeschlossene Energiequelle der Zündstrom an das zündstromgesteuerte Irreversibel-Hochstromabschaltelement übertragen.

Der erste Steuerkontakt kann durch ein Isolationselement in Form einer Isolationsschicht von dem Bügel getrennt sein. Das Isolationselement kann aus Kunststoff oder einem anderen, nicht leitendem Material hergestellt sein. Der erste Steuerkontakt kann an einer Seite des Bügels angebracht sein, die einer Seite des Bügels gegenüber liegt, an dem das Halteelement befestigt ist.

Da der Bügel einen Teil des Hochstrompfades bildet, kann der Aufbau zum Kurzschließen der Steuerkontakte noch einfacher ausfallen als in den vorhergehenden Ausführungsformen und lediglich das Einfügen zweier Kontaktstellen in den Hochstrompfad zur Ausbildung des Bügels sowie das Anbringen eines Halteelementes an den Bügel erfordern. In dieser Ausführungsform sind die Steuerkontakte von der Überstromdetektionseinheit umfasst. In anderen Ausführungsformen können der erste und/oder der zweite Steuerkontakt außerhalb der Überstromdetektionseinheit angeordnet sein.

In einer besonderen Ausführungsform der Erfindung umfasst die Überstromdetektionseinheit ein Halteelement, das zwischen einem Wandungsabschnitt der Überstromdetektionseinheit und einem hochstromleitenden, gegenüber dem Wandungsabschnitt bewegbaren Bügel angeordnet ist. Der Bügel wird mit einer Haltekraft des Halteelements in Richtung des Wandungsabschnitts so gehalten, dass ein Stromfluss in dem Hochstrompfad durch den Bügel geführt wird und der Bügel einen Teil des Hochstrompfades bildet. In einer Richtung des Stromflusses des Hochstrompfades ist ein erster Steuerkontakt vor dem durch den Bügel gebildeten Teil des Hochstrompfades und ein zweiter Steuerkontakt nach dem durch den Bügel gebildeten Teil des Hochstrompfades jeweils an den Hochstrompfad angeschlossen. Die Überstromdetektionseinheit ist so ausgebildet, dass, wenn der Überstrom im Hochstrompfad fließt, der Bügel sich gegen die Haltekraft der Halteelements derart von dem nicht durch den Bügel gebildeten Teil des Hochstrompfades wegbewegt, dass sich an zumindest einer Hochstromkontaktstelle zwischen dem Bügel und dem nicht durch den Bügel gebildeten Teil des Hochstrompfades ein Lichtbogen ausbildet, der einen Widerstand besitzt, der zu einer über den ersten und zweiten Steuerkontakten abfallenden Spannung führt. Die Spannung und der Widerstand bewirken, dass der Zündstrom an das zündstromgesteuerte Irreversibel-Hochstromabschaltelement übertragen wird.

Bei dieser Ausführungsform wird der Lichtbogen, der entsteht, wenn sich der Bügel bei einem Überstrom von dem nicht durch den Bügel gebildeten Teil des Hochstrompfades trennt, als Energiequelle zur Erzeugung des Zündstroms verwendet. Ein Lichtbogen kann an jedem Ende des Bügels auftreten. Alternativ kann ein Ende des Bügels drehbar und elektrisch leitend mit dem nicht durch den Bügel gebildeten Teil des Hochstrompfades verbunden sein. Im Gegensatz zu den zuvor beschriebenen Ausführungsformen werden daher die Steuerkontakte nicht kurzgeschlossen, sondern über einen Widerstand, der durch den Lichtbogen gebildet wird, elektrisch miteinander verbunden. Die an den nicht durch den Bügel gebildeten Teil des Hochstrompfades angeschlossenen Steuerkontakte können so angeordnet sein, dass der Bügel zwischen die Steuerkontakte geschaltet ist. Daher ist eine Anordnung der Steuerkontakte oder von einem der beiden Steuerkontakte innerhalb oder außerhalb der Überstromdetektionseinheit möglich.

In den beschriebenen Ausführungsformen der Erfindung mit dem Bügel kann das Haltelement als ein fester Halter ausgebildet ist, der bricht, wenn die elektromagnetische Kraft, die durch den Überstrom generiert wird, einen vorbestimmten Wert überschreitet. Auf diese Weise kann das Halteelement auf einfache und kostengünstige Weise bereitgestellt werden.

Bei einer weiteren Ausführungsform der erfindungsgemäßen DC-Überstromschutzvorrichtung umfasst die Überstromdetektionseinheit ein Halteelement, das zwischen einem Wandungsabschnitt der Überstromdetektionseinheit und einem hochstromleitenden, gegenüber dem Wandungsabschnitt bewegbaren Bügel angeordnet ist. Der Bügel wird mit einer Haltekraft des Halteelements in Richtung des Wandungsabschnitts so gehalten und ein Permanentmagnet ist so an dem Bügel befestigt und in einer Wicklung geführt, dass, wenn keine Steuerspannung einer Spannungsquelle an der Wicklung anliegt, ein Stromfluss in dem Hochstrompfad durch den Bügel vermieden wird und der Bügel keinen Teil des Hochstrompfades bildet. Wenn die Steuerspannung der Spannungsquelle an der Wicklung anliegt und ein Strom kleiner als der vorbestimmte Strom im Hochstrompfad fließt, bewegt sich der Bügel gegen die Haltekraft der Halteelements derart, dass der Stromfluss in dem Hochstrompfad durch den Bügel geführt wird und der Bügel einen Teil des Hochstrompfades bildet. In einer Richtung des Stromflusses des Hochstrompfades ist ein erster Steuerkontakt vor dem durch den Bügel gebildeten Teil des Hochstrompfades und ein zweiter Steuerkontakt nach dem durch den Bügel gebildeten Teil des Hochstrompfades jeweils an den Hochstrompfad angeschlossen. Zwischen zumindest einen der ersten und zweiten Steuerkontakte und das zündstromgesteuerte Irreversibel-Hochstromabschaltelement ist ein Schütz, der an die Spannungsquelle angeschlossen ist, derart geschaltet, dass, wenn keine Steuerspannung der Spannungsquelle an der Wicklung und an dem Schütz anliegt und der Bügel keinen Teil des Hochstrompfades bildet, eine über den ersten und zweiten Steuerkontakten anliegende Leerlaufspannung keine Übertragung des Zündstroms an das zündstromgesteuerte Irreversibel-Hochstromabschaltelement bewirkt. Die Überstromdetektionseinheit ist hierbei so ausgebildet, dass, wenn der Überstrom im Hochstrompfad fließt, der Bügel sich in Richtung der Haltekraft der Halteelements trotz der an der Wicklung und an dem Schütz anliegenden Steuerspannung der Spannungsquelle derart von dem nicht durch den Bügel gebildeten Teil des Hochstrompfades wegbewegt, dass sich an zumindest einer Hochstromkontaktstelle zwischen dem Bügel und dem nicht durch den Bügel gebildeten Teil des Hochstrompfades ein Lichtbogen ausbildet. Der Lichtbogen besitzt einen Widerstand, der zu einer über den ersten und zweiten Steuerkontakten abfallenden Spannung führt. Die Spannung und der Widerstand bewirken, dass der Zündstrom an das zündstromgesteuerte Irreversibel-Hochstromabschaltelement übertragen wird.

Bei dieser Ausführungsform bildet die Überstromdetektionseinheit einen Hochstromschütz, wobei durch den Schütz verhindert wird, dass eine Leerlaufspannung, die über dem Bügel bei geöffnetem Hochstromschütz anliegt, zur Übertragung des Zündstroms an das Irreversibel-Hochstromabschaltelement führt. Dieses Abschaltelement löst daher nur aus, wenn der Hochstromschütz für einen Stromfluss im Hochstrompfad geschlossen ist und ein Überstrom derart auftritt, dass sich zwischen dem Bügel und dem nicht durch den Bügel gebildeten Teil des Hochstrompfades ein Lichtbogen ausbildet, der ausreicht, dass das das Irreversibel-Hochstromabschaltelement den Stromfluss im Hochstrompfad abschaltet. Bei Strömen unterhalb des Überstroms oder bei ausbleibendem Stromfluss kann die Überstromdetektionseinheit reversibel den Hochstrompfad trennen oder schließen.

Vorteilhafterweise kann in sämtlichen vorbeschriebenen DC-Überstromschutzvorrichtungen gemäß der Erfindung das Haltelement als eine Feder ausgebildet sein.

Die erfindungsgemäße DC-Überstromschutzvorrichtung kann in einer vorteilhaften Ausführungsform in einem Gehäuse und/oder als ein Bauteil integriert sein.

Die DC-Überstromschutzvorrichtung gemäß der Erfindung kann zudem in einem Hochvoltbordnetz für ein Fahrzeug, vorzugsweise für ein Elektro- oder Hybridfahrzeug, integriert sein.

Ausführungsbeispiele der Erfindung werden nachfolgend anhand von Figuren näher erläutert. Zur besseren Anschaulichkeit wird in den Figuren auf eine maßstabs- oder proportionsgetreue Darstellung verzichtet. In den Figuren bezeichnen, sofern nicht anders angegeben, gleiche Bezugszeichen gleiche Teile mit gleicher Bedeutung.

Es zeigen:
Figur 1 eine schematische Anordnung einer DC-Überstromschutzvorrichtung in einer ersten Ausführungsform mit einem zündstromgesteuerten Irreversibel-Hochstromabschaltelement, einer zu diesem Abschaltelement in Reihe geschalteten Überstromdetektionseinheit, von der Überstromdetektionseinheit umfassten Steuerkontakten und einer zwischen die Steuerkontakte und das Abschaltelement geschalteten Energiequelle,
Figur 2 den Aufbau einer DC-Überstromschutzvorrichtung in einer zweiten Ausführungsform mit einer reversiblen Überstromdetektionseinheit gemäß der in Fig. 1 gezeigten schematischen Anordnung,
Figur 3A den Aufbau der erfindungsgemäßen DC-Überstromschutzvorrichtung mit einer irrreversiblen Überstromdetektionseinheit bei einem normalen Hochstrom in einer dritten Ausführungsform gemäß der in Fig. 1 gezeigten schematischen Anordnung,
Figur 3B den Aufbau der in Fig. 3A gezeigten erfindungsgemäßen DC-Überstromschutzvorrichtung bei einem Überstrom gemäß der in Fig. 1 gezeigten schematischen Anordnung,
Figur 4 den Aufbau der erfindungsgemäßen DC-Überstromschutzvorrichtung mit einem zwischen die Steuerkontakte geschalteten Bügel bei einem Überstrom in einer vierten Ausführungsform, und
Figur 5 den Aufbau der erfindungsgemäßen DC-Überstromschutzvorrichtung mit dem zwischen die Steuerkontakte geschalteten Bügel und einer unterhalb des Überstroms reversibel trennenden Überstromdetektionseinheit bei einem Überstrom in einer fünften Ausführungsform.

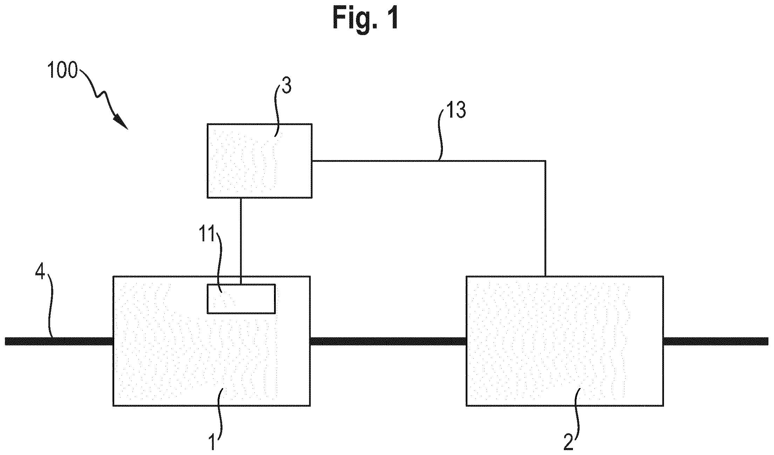

Figur 1 zeigt eine schematische Anordnung einer DC-Überstromschutzvorrichtung 100 mit einem zündstromgesteuerten Irreversibel-Hochstromabschaltelement 2, das elektrisch in einem Hochstrompfad 4 zu einer Überstromdetektionseinheit 1 in Reihe geschaltet ist. Das zündstromgesteuerte Irreversibel-Hochstromabschaltelement 2 ist als pyrotechnisches Abschaltelement ausgeführt und ist elektrisch mit einer ersten Zündstromübertragungsleitung 13 verbunden. Eine Energiequelle 3, beispielsweise ein Kondensator, Doppelschichtkondensator, eine Batterie oder Hochvoltbatterie eines für einem Überstrom zu schützenden Hochvoltbordnetzes, ist über die Zündstromübertragungsleitung 13 an das pyrotechnische Abschaltelement angeschlossen. Durch Kurzschließen von Steuerkontakten 11, die von der Überstromdetektionseinheit 1 umfasst sind, bei Auftreten eines Überstroms in dem Hochstrompfad 4 kann die Energiequelle 3 derart an das pyrotechnische Abschaltelement 2 angeschlossen werden, dass ein Zündstrom von der Energiequelle 3 an das pyrotechnische Abschaltelement übertragen wird, um das pyrotechnische Abschaltelement 2 in einen Abschaltzustand zu steuern. Sobald der Abschaltzustand eingetreten ist, wird ein Stromfluss in dem Hochstrompfad 4 durch das pyrotechnische Abschaltelement 2 unterbunden.

Das Steuern des pyrotechnischen Abschaltelementes 2 in den Abschaltzustand ist irreversibel, so dass das pyrotechnische Abschaltelement 2 nach dem Abschalten ausgetauscht werden muss, damit die DC-Überstromschutzvorrichtung weiterhin funktioniert. Die Funktion der DC-Überstromschutzvorrichtung besteht darin, einen normalen Hochstrom, der zwischen ca. 1500 A und unterhalb von ca. 3000 A liegt, in dem Hochstrompfad 4 durchzuleiten und ab einem Überstrom von ca. 3000 A einen Stromfluss in dem Hochstrompfad 4 zu unterbinden. Die Überstromdetektionseinheit 1 ist so ausgebildet, dass, wenn ein Überstrom in dem Hochstrompfad 4 fließt, die Steuerkontakte 11 aufgrund einer durch den Überstrom bewirkten elektromagnetischen Kraft derart kurzgeschlossen werden, dass von der Energiequelle 3 ein Zündstrom an das zündstromgesteuerte Irreversibel-Hochstromabschaltelement 2 übertragen wird, so dass dieses Abschaltelement 2 in den Abschaltzustand gesteuert wird.

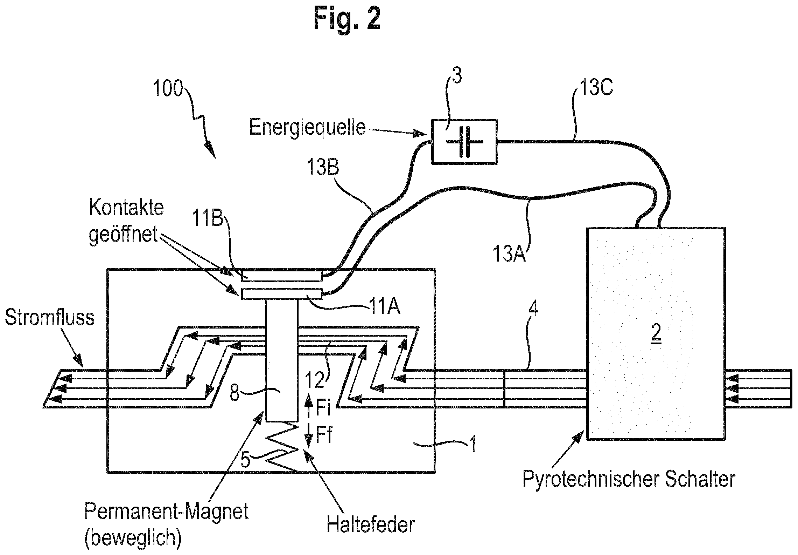

Figur 2 zeigt den Aufbau einer DC-Überstromschutzvorrichtung 100 in einer weiteren Ausführungsform mit einer vollständig reversiblen Überstromdetektionseinheit 1, die nach Auftreten des Überstroms im Hochstrompfad 4 ohne eine Änderung wieder verwendet werden kann. Die Überstromdetektionseinheit 1 umfasst eine Wicklung in Form einer Induktivität, die im einfachsten Fall, wie in Figur 2 gezeigt, durch eine Leiterschleife 12 des Hochstrompfades 4 gebildet wird. Die Leiterschleife 12 ist um einen Permanentmagneten 8 geführt, der an einem Ende über ein Halteelement 5 in Form einer Haltefeder mit einem Wandungsabschnitt eines Gehäuses der Überstromdetektionseinheit 1 verbunden ist. Der Permanentmagnet 8 wird mit einer Haltekraft des Halteelements 5 in Richtung des Wandungsabschnitts gehalten (siehe Pfeil Ff in Fig. 2) und weist an einem anderen Ende, das dem einen Ende gegenüberliegt, einen ersten Steuerkontakt 11A auf, der bei einem normalen Hochstrom unterhalb des Überstroms in dem Hochstrompfad 4 einem zweiten, gegenüber dem Wandungsabschnitt ortsfest angeordneten Steuerkontakt 11B gegenüberliegt und über eine erste Steuerleitung 13A mit dem pyrotechnischen Abschaltelement 2 elektrisch verbunden ist.

Ein durch die Leiterschleife 12 gebildetes Magnetfeld bei einem Stromfluss durch den Hochstrompfad 4 wirkt auf den Permanentmagnet 8 und kann den Permanentmagnet 8 bewegen. Sobald ein Strom im Hochstrompfad 4 den Wert des Überstroms erreicht oder übersteigt, d.h. von einem normalen Hochstrom zu einem Überstrom wird, liegt ein Überstrom vor, der zu einem durch die Leiterschleife 12 gebildeten Magnetfeld führt, dass hoch genug ist, dass der Permanentmagnet 8 sich gegen die Haltekraft des Halteelements 5 derart bewegt (siehe Pfeil Fi in Fig. 2), dass der bewegliche erste Steuerkontakt 11A den zweiten ortsfesten Steuerkontakt 11B berührt, wodurch die ersten und zweiten Steuerkontakte 11A, 11B kurzgeschlossen werden. Aufgrund des Kurzschlusses der ersten und zweiten Steuerkontakte 11A, 11B wird die über eine zweite Steuerleitung 13B an den zweiten Kontakt 11B angeschlossene Energiequelle 3 derart über eine zweite Zündstromübertragungsleitung 13C an das pyrotechnische Abschaltelement 2 angeschlossen, dass ein Zündstrom an das pyrotechnische Abschaltelement 2 übertragen wird, um das pyrotechnische Abschaltelement 2 abzuschalten, was eine Unterbrechung eines Stromflusses im Hochstrompfad 4 zur Folge hat.

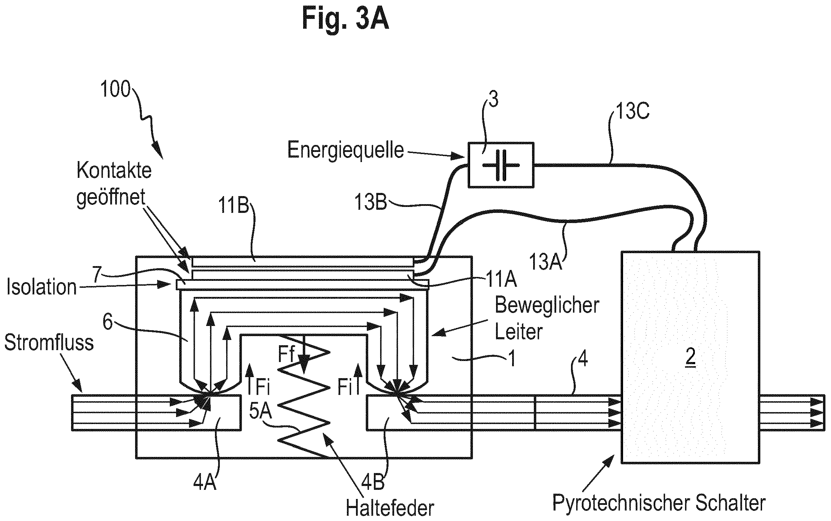

Figur 3A zeigt den Aufbau der erfindungsgemäßen DC-Überstromschutzvorrichtung 100 mit einer irreversiblen Überstromdetektionseinheit 1 bei einem normalen Hochstrom unterhalb des Überstroms in einer weiteren Ausführungsform gemäß der in Figur 1 gezeigten schematischen Anordnung. Die Überstromdetektionseinheit 1 umfasst ein Halteelement 5A, dass zwischen einem Wandungsabschnitt eines Gehäuses der Überstromdetektionseinheit 1 und einem hochstromleitenden, gegenüber dem Wandungsabschnitt bewegbaren Bahnbügel 6 angeordnet ist, an dem der erste Steuerkontakt 11A befestigt ist. Der erste Steuerkontakt 11A ist von dem Bügel 6 durch eine Isolationsschicht 7 elektrisch isoliert getrennt. Der Bügel 6 wird mit einer Haltekraft des Halteelements 5A in Richtung des Wandungsabschnitts so gehalten (siehe Pfeil Ff in Fig. 3A), dass ein Stromfluss im Hochstrompfad 4 bei einem normalen Hochstrom unterhalb des Überstroms durch den Bügel 6 geführt wird, sodass der Bügel 6 einen Teil des Hochstrompfades 4 bildet.

Enden des Bügels 6 bilden Hochstromkontakte mit Abschnitten 4A, 4B des nicht durch den Bügel 6 gebildeten Teils des Hochstrompfades 4. Der Bügel 6 wird durch das Halteelement 5A in Form einer Haltefeder an die Hochstromkontakte gepresst, sodass bei einem Strom, der einen Wert aufweist, der kleiner ist als der Wert des Überstroms, durch den Hochstrompfad 4 dieser Strom durch den Bügel 6 als Teil des Hochstrompfades 4 geführt wird. Entsprechend der in Figur 2 gezeigten DC-Überstromschutzvorrichtung liegt auch bei der in Figur 3A gezeigten DC-Überstromschutzvorrichtung der erste Steuerkontakt 11A bei einem normalen Hochstrom in dem Hochstrompfad 4 einem zweiten, gegenüber dem Wandungsabschnitt ortsfest angeordneten Steuerkontakt 11B beabstandet gegenüber, wobei der erste Steuerkontakt 11A über eine erste Steuerleitung 13A mit dem pyrotechnischen Abschaltelement 2 elektrisch verbunden ist. Die über eine zweite Steuerleitung 13B an den zweiten Kontakt 11B angeschlossene Energiequelle 3 ist über die zweite Zündstromübertragungsleitung 13C an das pyrotechnische Abschaltelement 2 angeschlossen. Bei einem Strom entsteht an jedem Hochstromkontakt im Hochstrompfad 4 eine elektromagnetische Kraft, die versucht, die Hochstromkontakte auseinander zu ziehen (siehe Pfeil Fi in Fig. 3A).

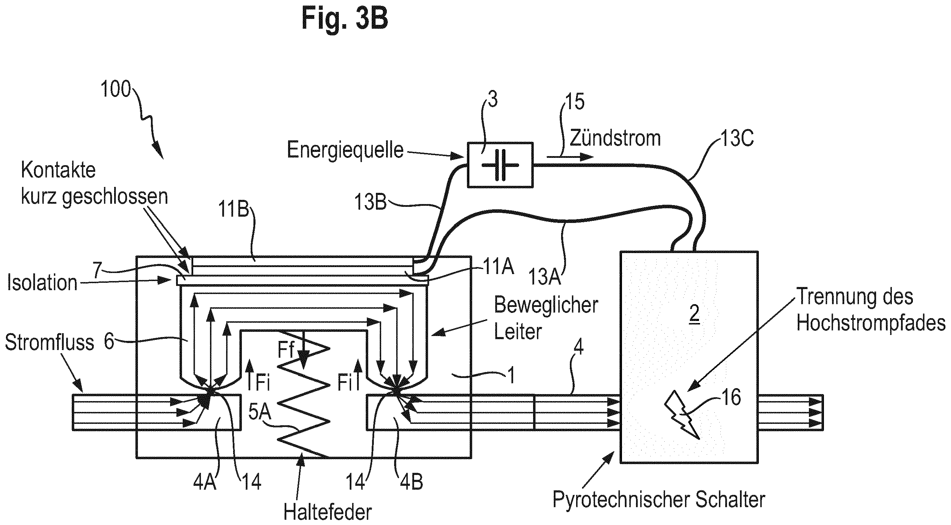

Figur 3B zeigt den Aufbau der in Fig. 3A gezeigten erfindungsgemäßen DC-Überstromschutzvorrichtung 100 bei einem Überstrom. Wenn ein Überstrom im Hochstrompfad 4 fließt, wird der Bügel 6 gegen die Haltekraft des Halteelements (siehe Pfeil Fi in Fig. 3B) derart bewegt, dass der erste Steuerkontakt 11A den zweiten ortsfesten Steuerkontakt 11B berührt, wodurch der erste Steuerkontakt 11A und der zweite Steuerkontakt 11B kurzgeschlossen werden, so dass die Energiequelle 3 einen für ein Abschalten des pyrotechnischen Schaltelements 2 erforderlichen Zündstrom 15 an das pyrotechnische Abschaltelement 2 überträgt, was zu einer Trennung 16 des Hochstrompfades 4 führt.

Wenn der Strom im Hochstrompfad 4 einen vorbestimmten Wert für einen Überstrom übersteigt, ziehen sich die Hochstromkontakte an den Abschnitten 4A, 4B des Hochstrompfades 4 auseinander und der Bügel 6 bewegt sich entgegen der Haltekraft des Halteelements 5A und schließt die ersten und zweiten Steuerkontakte 11A, 11B kurz. Bei dem Auseinanderziehen der Hochstromkontakte bildet sich an jedem der Hochstromkontakte ein Lichtbogen 14 aus. Vorteilhafter Weise besitzt der Lichtbogen 14 einen hohen Widerstand, der bewirkt, dass der im Hochstrompfad 4 fließende Strom gesenkt wird. Dadurch wird das Trennen/Unterbinden des Stroms/Stromflusses in dem Hochstrompfad 4 durch das pyrotechnische Abschaltelement 2 vereinfacht. Die Nutzung des Lichtbogens 14 als Widerstand zum erleichterten Abschalten durch das pyrotechnische Abschaltelement 2 ist insbesondere bei sehr hohen Kurzschlussströmen im Hochstrompfad 4 vorteilhaft. Allerdings wird durch den Lichtbogen 14, gegebenenfalls verbunden mit Funkenbildung, die Überstromdetektionseinheit 1 nachhaltig beschädigt, sodass nach dem Auftreten eines Überstroms die Überstromdetektionseinheit 1 nicht ohne Instandsetzung der beschädigten Abschnitte 4A, 4B des Hochstrompfades 4 und des Bügels 6 funktionsgemäß weiterverwendet werden kann.

Bei der in den Figuren 3A und 3B gezeigten DC-Überstromschutzvorrichtung 100 kann anstelle des Halteelements 5A in Form der Haltefeder ein fester Halter verwendet werden, der bricht, wenn die elektromagnetische Kraft den vorbestimmten Wert für einen Überstrom überschreitet.

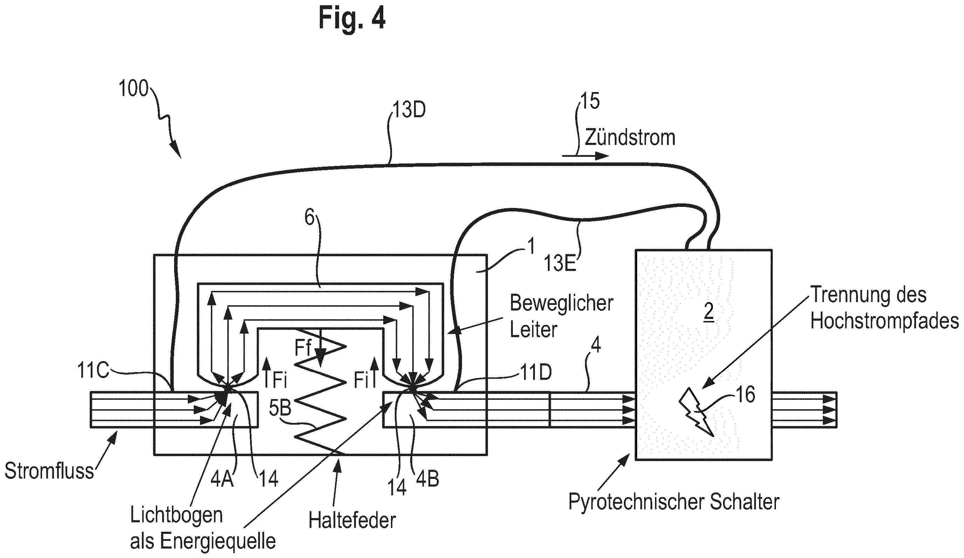

Figur 4 zeigt den Aufbau der erfindungsgemäßen DC-Überstromschutzvorrichtung 100 in einer weiteren Ausführungsform mit einem zwischen Steuerkontakte 11C, 11D geschalteten Bügel 6 bei einem Überstrom. Hochstromkontakte werden durch Enden des Bügels 6 und Abschnitte 4A, 4B des Hochstrompfades 4 gebildet. Die Überstromdetektionseinheit 1 umfasst ein Halteelement 5B das zwischen einem Wandungsabschnitt eines Gehäuses der Überstromdetektionseinheit 1 und dem hochstromleitenden, gegenüber dem Wandungsabschnitt bewegbaren Bügel 6 angeordnet ist. Der Bügel 6 wird mit einer Haltekraft des Halteelements 5B (siehe Pfeil Ff in Fig. 4) in Richtung des Wandungsabschnitts so gehalten, dass ein Stromfluss in dem Hochstrompfad 4 mit einem Strom unterhalb des Überstroms durch den Bügel 6 geführt wird und der Bügel 6 einen Teil des Hochstrompfades 4 bildet. Insofern entspricht der Aufbau der in Figur 4 gezeigten Überstromdetektionseinheit 1 dem Aufbau der Überstromdetektionseinheit 1, die in den Figuren 3A, 3B gezeigt ist.

Im Unterschied zu der in den Figuren 3A, 3B gezeigten Überstromdetektionseinheit 1 ist in einer Richtung des Stromflusses (siehe Pfeile innerhalb des Hochstrompfades 4, die von der Überstromdetektionseinheit 1 zu dem pyrotechnischen Abschaltelement 2 zeigen) des Hochstrompfades 4 der erste Steuerkontakt 11C vor dem durch den Bügel gebildeten Teil des Hochstrompfades 4 an den Abschnitt 4A des Hochstrompfades 4 angeschlossen. In Richtung des Stromflusses des Hochstrompfades 4 ist der zweite Steuerkontakt 11D nach dem durch den Bügel 6 gebildeten Teil des Hochstrompfades 4 an den Abschnitt 4B des Hochstrompfades 4 angeschlossen.

Wenn der Überstrom im Hochstrompfad 4 fließt, bewegt sich der Bügel 6 gegen die Haltekraft des Halteelements 5B derart von dem nicht durch den Bügel gebildeten Teil des Hochstrompfades 4 mit den Abschnitten 4A, 4B weg (siehe Pfeil Fi in Fig. 4), dass sich an den Hochstromkontaktstellen zwischen dem Bügel 6 und den Abschnitten 4A, 4B des Hochstrompfades 4 jeweils ein Lichtbogen 14 ausbildet, der einen Widerstand besitzt, der zu einer über den ersten und zweiten Steuerkontakten 11C, 11D abfallenden Spannung führt. Diese Spannung und der Widerstand des Lichtbogens 14 bewirken den Zündstrom 15, der an das pyrotechnische Abschaltelement 2 übertragen wird zur Ausführung einer Trennung 16 des Hochstrompfades 4.

Bei der in Figur 4 gezeigten DC-Überstromschutzvorrichtung 100 gibt es im Gegensatz zu der in den Figuren 3A, 3B gezeigten DC-Überschutzvorrichtung 100 keine Energiequelle 3, die an die zweite Steuerleitung 13B und die zweite Zündstromübertragungsleitung 13C angeschlossen ist. Stattdessen ist der Bügel 6 zwischen die ersten und zweiten Steuerkontakte 11C, 11D derart geschaltet, dass bei einem Überstrom auftretende Lichtbögen 14 an den Enden des Bogens 6 und der Abschnitte 4A, 4B des Hochstrompfades 4 eine Spannung und einen Widerstand bewirken, die ausreichen, den zur Trennung des Hochstrompfades 4 erforderlichen Zündstrom 15 zu erzeugen und an das pyrotechnische Abschaltelement 2 zu übertragen. Im Gegensatz zu der in den Figuren 3A, 3B gezeigten DC-Überstromschutzvorrichtung gibt es bei der in Figur 4 gezeigten Ausführungsform keine zueinander beweglichen Steuerkontakte, die bei einem Überstrom kurzgeschlossen werden, um der Energiequelle 3 die Übertragung des Zündstrom an das pyrotechnische Abschaltelement 2 zu möglichen. Stattdessen sind die ersten und zweiten Steuerkontakte 11C, 11D, direkt, wobei in einer weiteren Ausführungsform alternativ ein indirekter Anschluss möglich ist, über dritte und vierte Steuerleitungen 13D, 13E mit dem pyrotechnischen Abschaltelement 2 elektrisch verbunden und zueinander ortsfest derart an den Hochstrompfad 4 angeschlossen, dass der Lichtbogen 14 bzw. die durch den Lichtbogen 14 ausgebildete Spannung an den Hochstromkontakten an den Enden des Bügels 6 die Energiequelle für das Zünden des pyrotechnischen Abschaltelement 2 bildet.

Im normalen Betrieb bei Strömen unterhalb des Überstroms sind die Hochstromkontakte geschlossen und der Spannungsabfall über diesen Hochstromkontakten ist klein und nicht ausreichend, um das pyrotechnische Abschaltelement 2 zu zünden. Wenn sich jedoch bei einem Überstrom ein Lichtbogen 14 an zumindest einem Ende des Bügels 6 ausbildet, entsteht über diesem Bügel 6 ein Spannungsabfall, der hoch ist, da der Lichtbogen einen hohen Widerstand aufweist. Diese Spannung ist ausreichend, um das pyrotechnische Abschaltelement 2 zu zünden und die Trennung 16 des Hochstrompfades auszulösen.

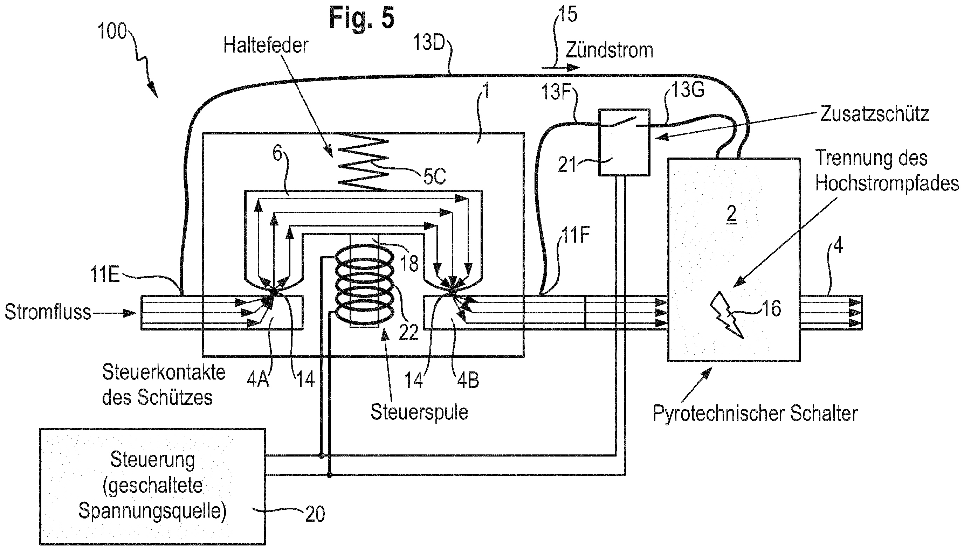

Figur 5 zeigt den Aufbau einer weiteren Ausführungsform der erfindungsgemäßen DC-Überstromschutzvorrichtung 100 mit einem zwischen erste und zweite Steuerkontakte 11E, 11F geschalteten Bügel 6 und einer unterhalb des Überstroms reversibel trennenden Überstromdetektionseinheit 1 bei einem Überstrom. Die Überstromdetektionseinheit 1 weist ein Halteelement 5C auf, dass zwischen einem Wandungsabschnitt eines Gehäuses der Überstromdetektionseinheit 1 und einem hochstromleitenden, gegenüber dem Wandungsabschnitt bewegbaren Bügel 6 angeordnet ist. Der Bügel wird mit einer Haltekraft des Halteelements 5C in Richtung des Wandungsabschnitts so gehalten und ein Permanentmagnet 18 ist so an dem Bügel 6 befestigt und in einer Wicklung 22 geführt, dass, wenn keine Steuerspannung einer Spannungsquelle 20 an der Wicklung 22 anliegt, ein Stromfluss des Hochstrompfades 4 durch den Bügel 6 vermieden wird und der Bügel 6 keinen Teil des Hochstrompfades 4 bildet. Wenn die Steuerspannung der Spannungsquelle 20 an der Wicklung 22 anliegt und ein Strom kleiner als der Überstrom im Hochstrompfad 4 fließt, wird der Bügel 6 derart gegen die Haltekraft des Halteelements 5C bewegt, dass der Stromfluss des Hochstrompfades 4 durch den Bügel 6 geführt wird und der Bügel 6 einen Teil des Hochstrompfades 4 bildet.

Hochstromkontakte werden durch Enden des Bügels 6 und Abschnitte 4A, 4B des Hochstrompfades 4 gebildet. Entsprechend der in den Figur 4 gezeigten Überstromdetektionseinheit 1 ist in einer Richtung des Stromflusses des Hochstrompfades 4 der erste Steuerkontakt 11E vor dem durch den Bügel gebildeten Teil des Hochstrompfades 4 an den Abschnitt 4A des Hochstrompfades 4 angeschlossen. In Richtung des Stromflusses des Hochstrompfades 4 ist der zweite Steuerkontakt 11F nach dem durch den Bügel 6 gebildeten Teil des Hochstrompfades 4 an den Abschnitt 4B des Hochstrompfades 4 angeschlossen. Im Unterschied zu der in der Figur 4 gezeigten DC-Überstromschutzvorrichtung sind bei der in Figur 5 gezeigten erfindungsgemäßen Vorrichtung die ersten und zweiten Steuerkontakte 11E, 11F nicht von der Überstromdetektionseinheit 1 umfasst, sondern außerhalb der Überstromdetektionseinheit 1 an die Abschnitte 4A, 4B des Hochstrompfades 4 angeschlossen.

Der erste Steuerkontakt 11E ist über die dritte Steuerleitung 13D an das pyrotechnische Abschaltelement 2 angeschlossen. Zwischen den zweiten Steuerkontakt 11F und das pyrotechnische Abschaltelement 2 ist über eine fünfte Steuerleitung 13 F und eine sechste Steuerleitung 13G ein Schütz 21 angeschlossen, der seinerseits an die Spannungsquelle 20 angeschlossen ist. Energie für die Spannungsquelle 20 und/oder die Überstromdetektionseinheit 1 kann beispielsweise einem Bordnetz mit einer Spannung von 12 V oder 48 V eines Fahrzeugs, insbesondere eines Elektro-, Hybride- oder Fuel-Cell-Fahrzeugs, entnommen werden. Wenn keine Steuerspannung der Spannungsquelle 20 an der Wicklung 22 und an dem Schütz 21 anliegt und der Bügel 6 keinen Teil des Hochstrompfades 4 bildet, wird durch den Schütz 21 sichergestellt, dass eine über den ersten und zweiten Steuerkontakten 11E, 11F abfallende Spannung, auch Leerlaufspannung genannt, keine Übertragung eines Zündstroms 15 an das pyrotechnische Abschaltelement 2 bewirkt.

Wenn ein Überstrom im Hochstrompfad 4 fließt, bewegt sich der Bügel 6 in Richtung der Haltekraft des Halteelements 5C trotz der an der Wicklung 22 und dem Schütz 21 anliegenden Steuerspannung der Spannungsquelle 20 derart von dem nicht durch den Bügel gebildeten Teil des Hochstrompfades weg, dass an den Hochstromkontaktstellen zwischen den Enden des Bügels 6 und den Abschnitten 4A, 4B des nicht durch den Bügel 6 gebildeten Teils des Hochstrompfades 4 sich jeweils ein Lichtbogen 14 ausbildet, der einen Widerstand besitzt, der zu einer über den ersten und zweiten Steuerkontakten 11E, 11F abfallenden Spannung führt. Die Spannung und der Widerstand der Lichtbögen 14 bewirken, dass der Zündstrom 15 an das pyrotechnische Abschaltelement 2 übertragen wird, so dass eine Trennung des Hochstrompfades 4 durch das pyrotechnische Abschaltelement 2 erfolgt.

Der Bügel 6, die Abschnitte 4A, 4B des Hochstrompfades 4, das Halteelement 5C, der Permanentmagnet 18 und die Wicklung 22 der Überstromdetektionseinheit 1 bilden in der in Fig. 5 gezeigten Ausführungsform einen Hochstromschütz. Der Hochstromschütz ist bei nicht anliegender Steuerspannung der Spannungsquelle 20 geöffnet, so dass ein Stromfluss in dem Hochstrompfad 4 unterbrochen ist. Dieser Zustand kann bei einem abgestellten Fahrzeug mit ausgeschalteter Zündung vorliegen. Im geöffneten Zustand des Hochstromschützes stellt der Hochstromschütz einen hohen Widerstand dar, sodass sichergestellt werden muss, dass eine über diesem Widerstand abfallende bzw. an dem Hochstromschütz anliegende Spannung nicht zum Zünden des pyrotechnischen Abschaltelements 2 führt. Zu diesem Zweck ist der Schütz 21, der einen kleineren Strom schalten können muss als der Hochstromschütz, im Zündkreis, der die dritte, fünfte und sechste Steuerleitung 13D, 13F, 13G umfasst, angeordnet. Vorteilhafterweise wird der Schütz 21 von der gleichen Spannungsquelle 20 mit einer Steuerspannung versorgt wie der Hochstromschütz. Bei dieser Anordnung wird im Zündkreis nur dann ein Zündstrom fließen, wenn einerseits an dem Hochstromschütz die Steuerspannung anliegt und der Hochstromschütz sich daher eigentlich in einem geschlossenen Zustand befindet, so dass Strom durch den Hochstrompfad 4 fließen kann, und andererseits der durch den Hochstrompfad 4 fließende Strom im Hochstromschütz so hoch ist, dass die Hochstromkontakte an den Enden des Bügels 6 auseinandergerissen werden, so dass sich ein Lichtbogen 14 ausbildet, der zu einer Spannung führt, die den für eine Trennung des Hochstrompfades 4 erforderlichen Zündstrom an das pyrotechnische Abschaltelement 2 bereitstellt.

Die in Figur 5 dargestellte Ausführungsform der erfindungsgemäßen DC-Überstromschutzvorrichtung 100 kann somit sowohl den Hochstrompfad 4 gesteuert durch den Hochstromschütz der Überstromdetektionseinheit 1 bei Strömen unterhalb des Überstroms trennen als auch bei einem Überstrom durch Zünden des pyrotechnischen Abschaltelement 2 eine Trennung des Hochstrompfades 4 herbeiführen.

Sämtliche beschriebene Ausführungsformen erlauben eine Integration der erfindungsgemäßen DC-Überstromschutzvorrichtung in einem Gehäuse bzw. in einem Bauteil. Sämtliche Ausführungsformen der erfindungsgemäßen DC-Überstromschutzvorrichtung verwenden zudem eine elektromagnetische Kraft zum Zünden/Auslösen/Abschalten des pyrotechnischen Abschaltelements 2.

Mit der vorliegenden Erfindung ergeben sich gegenüber einer Abschaltung des pyrotechnischen Abschaltelements mit einer Abschaltvorrichtung, die auf einer Strommessung basiert, die folgenden Vorteile: die erfindungsgemäße DC-Überstromschutzvorrichtung ist nicht empfindlich gegenüber Störungen, insbesondere gegenüber elektromagnetischen Störungen, die eine Strommessung beeinträchtigen können, jedoch nicht ausreichend Energie besitzen, um eine elektromagnetische Kraft mit einem Betrag und über eine Zeitdauer auszubilden, die ausreichend sind, eine Bewegung gegen ein Halteelement wie eine Feder auszuführen. Auf diese Weise wird ein Fehlauslösen des pyrotechnischen Abschaltelements bei derartigen elektromagnetischen Störungen verhindert. Die erfindungsgemäße DC-Überstromschutzvorrichtung benötigt keinen dauerhaften Strom zum Betrieb und weist daher keinen dauerhaften Stromverbrauch aus. Lediglich eine Selbstentladung einer gegebenenfalls vorhandenen Energiequelle 3 gemäß den in den Figuren 1, 2, 3A und 3b gezeigten Ausführungsformen der Erfindung ist in großem zeitlichen Abstand zu kompensieren. Als Energiequelle 3 kann ein Kondensator, ein Doppelschichtkondensator, eine Batterie, eine Hochvoltbatterie eines zu schützenden Hochvoltbordnetzes oder Ähnliches verwendet werden. Gegebenenfalls kann eine Ladeschaltung in die erfindungsgemäße DC-Überstromschutzvorrichtung implementiert werden, welche die Spannungsquelle 20 periodisch oder bei abfallen auf einen Minimalenergiewert zum Betrieb der Energiequelle nachlädt, um eine Selbstentladung zu kompensieren. Da keine elektronischen Bauteile bei der Nutzung der elektromagnetischen Kraft zur elektrischen Verbindung der Steuerkontakte 11, 11A-11F miteinander verwendet werden, ist die Ausfallrate der erfindungsgemäßen Vorrichtung sehr gering. Die erfindungsgemäße Vorrichtung reagiert auf einen Überstrom zudem sehr schnell, insbesondere in den Ausführungsformen, die in Bezug auf die Figuren 4 und 5 beschrieben sind.

## Patentansprüche

1. DC-Überstromschutzvorrichtung (100), umfassend ein zündstromgesteuertes Irreversibel-Hochstromabschaltelement (2),
eine Überstromdetektionseinheit (1), die elektrisch in einem Hochstrompfad (4) in Reihe mit dem zündstromgesteuerten Irreversibel-Hochstromabschaltelement (2) geschaltet ist, und Steuerkontakte (11A, 11B) zum Steuern des zündstromgesteuerten Irreversibel-Hochstromabschaltelements (2), die elektrisch verbindbar zueinander angeordnet sind, wobei
die Überstromdetektionseinheit (1) so ausgebildet ist, dass, wenn ein Überstrom mit einem Wert gleich oder größer als ein vorbestimmter Stromwert in dem Hochstrompfad (4) fließt, die Steuerkontakte (11A, 11B) aufgrund einer durch den Überstrom bewirkten elektromagnetischen Kraft derart elektrisch miteinander verbunden werden, dass ein Zündstrom (15) an das zündstromgesteuerte Irreversibel-Hochstromabschaltelement (2) übertragen wird, so dass das zündstromgesteuerte Irreversibel-Hochstromabschaltelement (2) in einen Abschaltzustand (16) gesteuert wird, **dadurch gekennzeichnet, dass**
die Überstromdetektionseinheit (1) ein Halteelement (5A) umfasst, das zwischen einem Wandungsabschnitt der Überstromdetektionseinheit (1) und einem hochstromleitenden, gegenüber dem Wandungsabschnitt bewegbaren Bügel (6), an dem ein erster Steuerkontakt (11A) befestigt ist, angeordnet ist, wobei
der Bügel (6) mit einer Haltekraft des Halteelements (5A) in Richtung des Wandungsabschnitts so gehalten wird, dass ein Stromfluss in dem Hochstrompfad (4) durch den Bügel (6) geführt wird und der Bügel (6) einen Teil des Hochstrompfades (4) bildet, indem Enden des Bügels (6) Hochstromkontakte mit Abschnitten (4A, 4B) des nicht durch den Bügel (6) gebildeten Teils des Hochstrompfades (4) bilden, und
die Überstromdetektionseinheit (1) so ausgebildet ist, dass, wenn der Überstrom im Hochstrompfad (4) fließt, der Bügel (6) sich gegen die Haltekraft des Halteelements (5A) derart bewegt, dass sich die Hochstromkontakte von den Abschnitten (4A, 4B) des Hochstrompfades (4) wegbewegen und sich an jedem der Hochstromkontakte ein Lichtbogen (14) ausbildet, und dass der erste Steuerkontakt (11A) einen zweiten, gegenüber dem Wandungsabschnitt ortsfesten Steuerkontakt (11B) berührt, wodurch der erste Steuerkontakt (11A) mit dem zweiten Steuerkontakt (11B) kurzgeschlossen wird, so dass durch eine an den zweiten Steuerkontakt (11B) angeschlossene Energiequelle (3) der Zündstrom an das zündstromgesteuerte Irreversibel-Hochstromabschaltelement (2) übertragen wird.

2. DC-Überstromschutzvorrichtung (100), umfassend ein zündstromgesteuertes Irreversibel-Hochstromabschaltelement (2),
eine Überstromdetektionseinheit (1), die elektrisch in einem Hochstrompfad (4) in Reihe mit dem zündstromgesteuerten Irreversibel-Hochstromabschaltelement (2) geschaltet ist, und Steuerkontakte (11C, 11D) zum Steuern des zündstromgesteuerten Irreversibel-Hochstromabschaltelements (2), die elektrisch verbindbar zueinander angeordnet sind, wobei die Überstromdetektionseinheit (1) so ausgebildet ist, dass, wenn ein Überstrom mit einem Wert gleich oder
größer als ein vorbestimmter Stromwert in dem Hochstrompfad (4) fließt, die Steuerkontakte (11C, 11D) aufgrund einer durch den
Überstrom bewirkten elektromagnetischen Kraft derart elektrisch miteinander verbunden werden, dass ein der Zündstrom (15) an das zündstromgesteuerte Irreversibel-Hochstromabschaltelement (2) übertragen wird, so dass das zündstromgesteuerte Irreversibel-Hochstromabschaltelement (2) in einen Abschaltzustand (16) gesteuert
wird,
**dadurch gekennzeichnet, dass** die Überstromdetektionseinheit (1) ein Halteelement (5B) umfasst, das zwischen einem Wandungsabschnitt der Überstromdetektionseinheit (1) und einem hochstromleitenden, gegenüber dem Wandungsabschnitt bewegbaren Bügel (6) angeordnet ist, wobei
der Bügel (6) mit einer Haltekraft des Halteelements (5B) in Richtung des Wandungsabschnitts so gehalten wird, dass ein Stromfluss in dem Hochstrompfad (4) durch den Bügel (6) geführt wird und der Bügel (6) einen Teil des Hochstrompfades (4) bildet,
in einer Richtung des Stromflusses des Hochstrompfades (4) ein erster Steuerkontakt (11C) vor dem durch den Bügel (6) gebildeten Teil des Hochstrompfades (4) und ein zweiter Steuerkontakt (11D) nach dem durch den Bügel (6) gebildeten Teil des Hochstrompfades (4) jeweils an den Hochstrompfad (4) angeschlossen ist, und
die Überstromdetektionseinheit (1) so ausgebildet ist, dass, wenn der Überstrom im Hochstrompfad (4) fließt, der Bügel (6) sich gegen die Haltekraft der Halteelements (5B) derart von dem nicht durch den Bügel gebildeten Teil des Hochstrompfades (4) wegbewegt, dass sich an zumindest einer Hochstromkontaktstelle zwischen dem Bügel (6) und dem nicht durch den Bügel gebildeten Teil des Hochstrompfades (4) ein Lichtbogen (14) ausbildet, der einen Widerstand besitzt, der zu einer über den ersten und zweiten Steuerkontakten (11C, 11D) abfallenden Spannung führt, wobei die Spannung und der Widerstand bewirken, dass der Zündstrom an das zündstromgesteuerte Irreversibel-Hochstromabschaltelement (2) übertragen wird.

3. DC-Überstromschutzvorrichtung (100) nach Anspruch 1 oder 2, wobei das Haltelement (5A, 5B) als ein fester Halter ausgebildet ist, der bricht, wenn die elektromagnetische Kraft, die durch den Überstrom generiert wird, einen vorbestimmten Wert überschreitet.

4. DC-Überstromschutzvorrichtung (100), umfassend ein zündstromgesteuertes Irreversibel-Hochstromabschaltelement (2),
eine Überstromdetektionseinheit (1), die elektrisch in einem Hochstrompfad (4) in Reihe mit dem zündstromgesteuerten Irreversibel-Hochstromabschaltelement (2) geschaltet ist, und Steuerkontakte (11E, 11F) zum Steuern des zündstromgesteuerten Irreversibel-Hochstromabschaltelements (2), die elektrisch verbindbar zueinander angeordnet sind, wobei die Überstromdetektionseinheit (1) so ausgebildet ist, dass, wenn ein Überstrom mit einem Wert gleich oder
größer als ein vorbestimmter Stromwert in dem Hochstrompfad (4) fließt, die Steuerkontakte (11E, 11F) aufgrund einer durch den
Überstrom bewirkten elektromagnetischen Kraft derart elektrisch miteinander verbunden werden, dass ein Zündstrom (15) an das zündstromgesteuerte Irreversibel-Hochstromabschaltelement (2) übertragen wird, so dass das zündstromgesteuerte Irreversibel-Hochstromabschaltelement (2) in einen Abschaltzustand (16) gesteuert
wird,**dadurch gekennzeichnet, dass** die Überstromdetektionseinheit (1) ein Halteelement (5C) umfasst, das zwischen einem Wandungsabschnitt der Überstromdetektionseinheit (1) und einem hochstromleitenden, gegenüber dem Wandungsabschnitt bewegbaren Bügel (6) angeordnet ist,
wobei
der Bügel (6) mit einer Haltekraft des Halteelements (5C) in Richtung des Wandungsabschnitts so gehalten wird und ein Permanentmagnet (18) so an dem Bügel (6) befestigt und in einer Wicklung (22) geführt ist, dass, wenn keine Steuerspannung einer Spannungsquelle (20) an der Wicklung (22) anliegt, ein Stromfluss in dem Hochstrompfad (4) durch den Bügel (6) vermieden wird und der Bügel (6) keinen Teil des Hochstrompfades (4) bildet, und, wenn die Steuerspannung der Spannungsquelle (20) an der Wicklung (22) anliegt und ein Strom kleiner als der vorbestimmte Strom im Hochstrompfad (4) fließt, der Bügel (6) sich gegen die Haltekraft der Halteelements (5C) derart bewegt, dass der Stromfluss in dem Hochstrompfad (4) durch den Bügel (6) geführt wird und der Bügel (6) einen Teil des Hochstrompfades (4) bildet,
in einer Richtung des Stromflusses des Hochstrompfades (4) ein erster Steuerkontakt (11E) vor dem durch den Bügel (6) gebildeten Teil des Hochstrompfades (4) und ein zweiter Steuerkontakt (11F) nach dem durch den Bügel (6) gebildeten Teil des Hochstrompfades (4) jeweils an den Hochstrompfad (4) angeschlossen ist,
zwischen zumindest einen der ersten und zweiten Steuerkontakte (11E, 11F) und das zündstromgesteuerte Irreversibel-Hochstromabschaltelement (2) ein Schütz (21), der an die Spannungsquelle (20) angeschlossen ist, derart geschaltet ist, dass, wenn keine Steuerspannung der Spannungsquelle (20) an der Wicklung (22) und an dem Schütz (21) anliegt und der Bügel (6) keinen Teil des Hochstrompfades (4) bildet, eine über den ersten und zweiten Steuerkontakten (11E, 11F) anliegende Leerlaufspannung keine Übertragung des Zündstroms an das zündstromgesteuerte Irreversibel-Hochstromabschaltelement (2) bewirkt, und
die Überstromdetektionseinheit (1) so ausgebildet ist, dass, wenn der Überstrom im Hochstrompfad (4) fließt, der Bügel (6) sich in Richtung der Haltekraft der Halteelements (5C) trotz der an der Wicklung (22) und an dem Schütz (21) anliegenden Steuerspannung der Spannungsquelle (20) derart von dem nicht durch den Bügel gebildeten Teil des Hochstrompfades (4) wegbewegt, dass sich an zumindest einer Hochstromkontaktstelle zwischen dem Bügel (6) und dem nicht durch den Bügel gebildeten Teil des Hochstrompfades (4) ein Lichtbogen (14) ausbildet, der einen Widerstand besitzt, der zu einer über den ersten und zweiten Steuerkontakten (11E, 11F) abfallenden Spannung führt, wobei die Spannung und der Widerstand bewirken, dass der Zündstrom an das zündstromgesteuerte Irreversibel-Hochstromabschaltelement (2) übertragen wird.

5. DC-Überstromschutzvorrichtung (100) nach einem der Ansprüche 1, 2 und 4, wobei das Haltelement (5, 5A, 5B, 5C) als eine Feder ausgebildet ist.

6. DC-Überstromschutzvorrichtung (100) nach einem der vorhergehenden Ansprüche, wobei die DC-Überstromschutzvorrichtung (100) in einem Gehäuse integriert ist.

7. Fahrzeug, vorzugsweise ein Elektro- oder Hybridfahrzeug, mit einer DC-Überstromschutzvorrichtung (100) nach einem der vorhergehenden Ansprüche, wobei die DC-Überstromschutzvorrichtung (100) in einem Hochvoltbordnetz des Fahrzeuges integriert ist.

## Claims

1. DC overcurrent protection device (100), comprising
an ignition current-controlled irreversible high-current deactivation element (2),
an overcurrent detection unit (1) that is connected electrically in series, in a high-current path (4), with the ignition current-controlled irreversible high-current deactivation element (2), and
control contacts (11A, 11B) for controlling the ignition current-controlled irreversible high-current deactivation element (2) that are arranged so as to be able to be electrically connected to one another, wherein
the overcurrent detection unit (1) is designed such that, when an overcurrent with a value equal to or greater than a predetermined current value flows in the high-current path (4), the control contacts (11A, 11B) are electrically connected to one another, due to an electromagnetic force brought about by the overcurrent, such that an ignition current (15) is transmitted to the ignition current-controlled irreversible high-current deactivation element (2), such that the ignition current-controlled irreversible high-current deactivation element (2) is controlled into a deactivated state (16), **characterized in that**
the overcurrent detection unit (1) comprises a holding element (5A) that is arranged between a wall section of the overcurrent detection unit (1) and a bracket (6) that channels a high current and is able to be moved in relation to the wall section and to which a first control contact (11A) is fastened, wherein
the bracket (6) is held in the direction of the wall section by a holding force of the holding element (5A) such that a flow of current in the high-current path (4) is channelled through the bracket (6) and the bracket (6) forms part of the high-current path (4) by virtue of ends of the bracket (6) forming high-current contacts with sections (4A, 4B) of that part of the high-current path (4) not formed by the bracket (6), and
the overcurrent detection unit (1) is designed such that, when the overcurrent flows in the high-current path (4), the bracket (6) moves counter to the holding force of the holding element (5A) such that the high-current contacts move away from the sections (4A, 4B) of the high-current path (4) and a light arc (14) forms at each of the high-current contacts, and that the first control contact (11A) makes contact with a second control contact (11B) that is positionally fixed with respect to the wall section, as a result of which the first control contact (11A) is short-circuited with the second control contact (11B) such that the ignition current is transmitted to the ignition current-controlled irreversible high-current deactivation element (2) by an energy source (3) connected to the second control contact (11B).

2. DC overcurrent protection device (100), comprising
an ignition current-controlled irreversible high-current deactivation element (2),
an overcurrent detection unit (1) that is connected electrically in series, in a high-current path (4), with the ignition current-controlled irreversible high-current deactivation element (2), and
control contacts (11C, 11D) for controlling the ignition current-controlled irreversible high-current deactivation element (2) that are arranged so as to be able to be electrically connected to one another, wherein the overcurrent detection unit (1) is designed such that, when an overcurrent with a value equal to or greater than a predetermined current value flows in the high-current path (4), the control contacts (11C, 11D) are electrically connected to one another, due to an electromagnetic force brought about by the overcurrent, such that an ignition current (15) is transmitted to the ignition current-controlled irreversible high-current deactivation element (2), such that the ignition current-controlled irreversible high-current deactivation element (2) is controlled into a deactivated state (16), **characterized in that** the overcurrent detection unit (1) comprises a holding element (5B) that is arranged between a wall section of the overcurrent detection unit (1) and a bracket (6) that channels a high current and is able to be moved in relation to the wall section, wherein
the bracket (6) is held in the direction of the wall section by a holding force of the holding element (5B) such that a flow of current in the high-current path (4) is channelled through the bracket (6) and the bracket (6) forms part of the high-current path (4),
in a direction of the flow of current of the high-current path (4), a first control contact (11C) upstream of that part of the high-current path (4) formed by the bracket (6) and a second control contact (11D) downstream of that part of the high-current path (4) formed by the bracket (6) are each connected to the high-current path (4), and
the overcurrent detection unit (1) is designed such that, when the overcurrent flows in the high-current path (4), the bracket (6) moves counter to the holding force of the holding element (5B) away from that part of the high-current path (4) not formed by the bracket such that a light arc (14) forms at at least one high-current point of contact between the bracket (6) and that part of the high-current path (4) not formed by the bracket, which light arc has a resistance that leads to a voltage drop across the first and second control contacts (11C, 11D), wherein the voltage and the resistance have the effect that the ignition current is transmitted to the ignition current-controlled irreversible high-current deactivation element (2).

3. DC overcurrent protection device (100) according to Claim 1 or 2, wherein the holding element (5A, 5B) is designed as a fixed holder that breaks when the electromagnetic force generated by the overcurrent exceeds a predetermined value.

4. DC overcurrent protection device (100), comprising
an ignition current-controlled irreversible high-current deactivation element (2),
an overcurrent detection unit (1) that is connected electrically in series, in a high-current path (4), with the ignition current-controlled irreversible high-current deactivation element (2), and
control contacts (11E, 11F) for controlling the ignition current-controlled irreversible high-current deactivation element (2) that are arranged so as to be able to be electrically connected to one another, wherein the overcurrent detection unit (1) is designed such that, when an overcurrent with a value equal to or greater than a predetermined current value flows in the high-current path (4), the control contacts (11E, 11F) are electrically connected to one another, due to an electromagnetic force brought about by the overcurrent, such that an ignition current (15) is transmitted to the ignition current-controlled irreversible high-current deactivation element (2), such that the ignition current-controlled irreversible high-current deactivation element (2) is controlled into a deactivated state (16), **characterized in that** the overcurrent detection unit (1) comprises a holding element (5C) that is arranged between a wall section of the overcurrent detection unit (1) and a bracket (6) that channels a high current and is able to be moved in relation to the wall section, wherein
the bracket (6) is held in the direction of the wall section by a holding force of the holding element (5C) and a permanent magnet (18) is fastened to the bracket (6) and is guided in a winding (22) such that, when no control voltage from a voltage source (20) is present at the winding (22), a flow of current in the high-current path (4) through the bracket (6) is avoided and the bracket (6) does not form part of the high-current path (4), and when the control voltage from the voltage source (20) is present at the winding (22) and a current smaller than the predetermined current flows in the high-current path (4), the bracket (6) moves counter to the holding force of the holding element (5C) such that the flow of current in the high-current path (4) is channelled through the bracket (6) and the bracket (6) forms part of the high-current path (4),
in a direction of the flow of current of the high-current path (4), a first control contact (11E) upstream of that part of the high-current path (4) formed by the bracket (6) and a second control contact (11F) downstream of that part of the high-current path (4) formed by the bracket (6) are each connected to the high-current path (4),
a contactor (21) that is connected to the voltage source (20) is connected between at least one of the first and second control contacts (11E, 11F) and the ignition current-controlled irreversible high-current deactivation element (2) such that, when no control voltage from the voltage source (20) is present at the winding (22) and at the contactor (21) and the bracket (6) does not form part of the high-current path (4), a no-load voltage present across the first and second control contacts (11E, 11F) does not bring about any transmission of the ignition current to the ignition current-controlled irreversible high-current deactivation element (2), and
the overcurrent detection unit (1) is designed such that, when the overcurrent flows in the high-current path (4), the bracket (6) moves in the direction of the holding force of the holding element (5C), in spite of the control voltage from the voltage source (20) that is present at the winding (22) and at the contactor (21), away from that part of the high-current path (4) not formed by the bracket such that a light arc (14) forms at at least one high-current point of contact between the bracket (6) and that part of the high-current path (4) not formed by the bracket, which light arc has a resistance that leads to a voltage drop across the first and second control contacts (11E, 11F), wherein the voltage and the resistance have the effect that the ignition current is transmitted to the ignition current-controlled irreversible high-current deactivation element (2).

5. DC overcurrent protection device (100) according to one of Claims 1, 2 and 4,
wherein the holding element (5, 5A, 5B, 5C) is designed as a spring.

6. DC overcurrent protection device (100) according to one of the preceding claims, wherein the DC overcurrent protection device (100) is integrated in a housing.

7. Vehicle, preferably an electric or hybrid vehicle, having a DC overcurrent protection device (100) according to one of the preceding claims, wherein the DC overcurrent protection device (100) is integrated in a high-voltage on-board power system of the vehicle.

## Revendications

1. Dispositif de protection contre les surintensités de courant CC (100) comprenant
un élément de coupure de courant de forte intensité irréversible (2) commandé par courant d'amorçage,
une unité de détection de surintensité de courant (1) qui est connectée électriquement en série avec l'élément de coupure de courant de forte intensité irréversible (2) commandé par courant d'amorçage dans un trajet de courant de forte intensité (4), et
des contacts de commande (11A, 11B) pour commander l'élément de coupure de courant de forte intensité irréversible (2) commandé par courant d'amorçage, lesquels sont disposés de manière à pouvoir être reliés électriquement les uns aux autres,
dans lequel l'unité de détection de surintensité de courant (1) est conçue de telle sorte que, lorsqu'une surintensité de courant de valeur supérieure ou égale à une valeur de courant prédéfinie circule dans le trajet de courant de forte intensité (4), les contacts de commande (11A, 11B) sont, en raison d'une force électromagnétique provoquée par la surintensité de courant, reliés électriquement les uns aux autres, de telle sorte qu'un courant d'amorçage (15) est transmis à l'élément de coupure de courant de forte intensité irréversible (2) commandé par courant d'amorçage,
de telle sorte que l'élément de coupure de courant de forte intensité irréversible (2) commandé par courant d'amorçage est commandé dans un état de coupure (16), **caractérisé en ce que** l'unité de détection de surintensité de courant (1) comprend un élément de maintien (5A) qui est disposé entre une partie de paroi de l'unité de détection de surintensité de courant (1) et un étrier conducteur de courant de forte intensité (6) qui est mobile par rapport à la partie de paroi et auquel est fixé un premier contact de commande (11A), dans lequel
l'étrier (6) est maintenu avec une force de maintien de l'élément de maintien (5A) dans la direction de la partie de paroi de telle sorte qu'un flux de courant dans le trajet de courant de forte intensité (4) est guidé à travers l'étrier (6) et que l'étrier (6) fait partie du trajet de courant de forte intensité (4), en raison du fait que les extrémités de l'étrier (6) forment des contacts de courant de forte intensité avec des parties (4A, 4B) de la partie du trajet à courant de forte intensité (4) qui n'est pas formée par l'étrier (6), et l'unité de détection de surintensité de courant (1) est conçue de telle sorte que lorsque la surintensité de courant circule dans le trajet de courant de forte intensité (4), l'étrier (6) se déplace contre la force de maintien de l'élément de maintien (5A) de telle sorte que les contacts de courant de forte intensité s'éloignent des parties (4A, 4B) du trajet de courant de forte intensité (4) et qu'un arc électrique (14) se forme sur chacun des contacts de courant de forte intensité,
et que le premier contact de commande (11A) est en contact avec un second contact de commande (11B) qui est fixe par rapport à la partie de la paroi, d'où il résulte que le premier contact de commande (11A) est court-circuité avec le second contact de commande (11B) de telle sorte que le courant d'amorçage est transmis à l'élément de coupure de courant de forte intensité irréversible (2) commandé par courant d'amorçage par une source d'énergie (3) connectée au deuxième contact de commande (11B).

2. Dispositif de protection contre les surintensités de courant CC (100) comprenant
un élément de coupure de courant de forte intensité irréversible (2) commandé par courant d'amorçage,
une unité de détection de surintensité de courant (1) qui est connectée électriquement en série avec l'élément de coupure de courant de forte intensité irréversible (2) commandé par courant d'amorçage dans un trajet de courant de forte intensité (4), et
des contacts de commande (11C, 11D) pour commander l'élément de coupure de courant de forte intensité irréversible (2) commandé par courant d'amorçage, lesquels sont disposés de manière à pouvoir être reliés électriquement les uns aux autres, dans lequel l'unité de détection de surintensité de courant (1) est conçue de telle sorte que, lorsqu'une surintensité de courant de valeur supérieure ou égale à une valeur de courant prédéfinie circule dans le trajet de courant de forte intensité (4), les contacts de commande (11C, 11D) sont,
en raison d'une force électromagnétique provoquée par la surintensité de courant, reliés électriquement les uns aux autres, de telle sorte qu'un courant d'amorçage (15) est transmis à l'élément de coupure de courant de forte intensité irréversible (2) commandé par courant d'amorçage, de telle sorte que l'élément de coupure de courant de forte intensité irréversible (2) commandé par courant d'amorçage est commandé dans un état de coupure (16),
**caractérisé en ce que** l'unité de détection de surintensité de courant (1) comprend un élément de maintien (5B) qui est disposé entre une partie de paroi de l'unité de détection de surintensité de courant (1) et un étrier conducteur de courant de forte intensité (6) qui est mobile par rapport à la partie de paroi, dans lequel
l'étrier (6) est maintenu par une force de maintien de l'élément de maintien (5B) dans la direction de la partie de paroi de telle sorte qu'un flux de courant dans le trajet de courant de forte intensité (4) est guidé à travers l'étrier (6) et que l'étrier (6) fait partie du trajet de courant de forte intensité (4),
dans une direction du flux de courant du trajet de courant de forte intensité (4), un premier contact de commande (11C) est raccordé au trajet de courant de forte intensité (4), en amont de la partie du trajet de courant de forte intensité (4) qui est formée par l'étrier (6), et un second contact de commande (11D) est raccordé, en aval de la partie du trajet de courant de forte intensité (4) qui est formée par l'étrier (6), au trajet de courant de forte intensité, et
l'unité de détection de surintensité de courant (1) est conçue de telle sorte, que lorsque la surintensité de courant circule dans le trajet de courant de forte intensité (4), l'étrier (6) s'éloigne de la partie du trajet de courant de forte intensité (4) qui n'est pas formée par l'étrier, contre la force de maintien des éléments de maintien (5B), de telle sorte qu'un arc électrique (14) se forme en au moins un point de contact de courant de forte intensité entre l'étrier (6) et la partie du trajet de courant de forte intensité (4) qui n'est pas formée par l'étrier, lequel possède une résistance qui provoque une chute de tension aux bornes des premier et second contacts de commande (11C, 11D), dans lequel la tension et la résistance provoquent la transmission du courant d'amorçage à l'élément de coupure de courant de forte intensité irréversible (2) commandé par courant d'amorçage.

3. Dispositif de protection contre les surintensités de courant CC (100) selon la revendication 1 ou 2, dans lequel l'élément de maintien (5A, 5B) est conçu sous la forme d'un support fixe qui se rompt lorsque la force électromagnétique générée par la surintensité dépasse une valeur prédéfinie.

4. Dispositif de protection contre les surintensités de courant CC (100) comprenant
un élément de coupure de courant de forte intensité irréversible (2) commandé par courant d'amorçage,
une unité de détection de surintensité de courant (1) qui est connectée électriquement en série avec ledit élément de coupure de courant de forte intensité irréversible (2) commandé par courant d'amorçage dans un trajet de courant de forte intensité (4), et
des contacts de commande (11E, 11F) pour commander l'élément de coupure de courant de forte intensité irréversible (2) commandé par courant d'amorçage, lesquels sont disposés de manière à pouvoir être reliés électriquement les uns aux autres, dans lequel l'unité de détection de surintensité de courant (1) est conçue de telle sorte que, lorsqu'une surintensité de courant de valeur supérieure ou égale à une valeur de courant prédéfinie circule dans le trajet de courant de forte intensité (4), les contacts de commande (11E, 11F) sont,
en raison d'une force électromagnétique provoquée par la surintensité de courant, reliés électriquement les uns aux autres, de telle sorte qu'un courant d'amorçage (15) est transmis à l'élément de coupure de courant de forte intensité irréversible (2) commandé par courant d'amorçage, de telle sorte que l'élément de coupure de courant de forte intensité irréversible (2) commandé par courant d'amorçage est commandé dans un état de coupure (16) ,
**caractérisé en ce que** l'unité de détection de surintensité de courant (1) comprend un élément de maintien (5C) qui est disposé entre une partie de paroi de l'unité de détection de surintensité de courant (1) et un étrier conducteur de courant de forte intensité (6) qui est mobile par rapport à la partie de paroi, dans lequel
l'étrier (6) est maintenu par une force de maintien de l'élément de maintien (5C) dans la direction de la partie de paroi, et un aimant permanent (18) est fixé à l'étrier (6) et guidé dans un enroulement (22) de telle sorte que, lorsqu'aucune tension de commande d'une source de tension (20) n'est appliquée à l'enroulement (22), un flux de courant dans le trajet de courant de forte intensité (4) à travers l'étrier (6) est évité et que l'étrier (6) ne fait pas partie du trajet de courant de forte intensité (4) et que, lorsque la tension de commande de la source de tension (20) est appliquée à l'enroulement (22) et qu'un courant inférieur au courant prédéfini circule dans le trajet de courant de forte intensité (4), l'étrier (6) se déplace contre la force de maintien de l'élément de maintien (5C) de telle sorte que le flux de courant dans le trajet de courant de forte intensité (4) est guidé à travers l'étrier (6) et que l'étrier (6) fait partie du trajet de courant de forte intensité (4),
dans une direction du flux de courant du trajet de courant de forte intensité (4), un premier contact de commande (11E) est raccordé au trajet de courant de forte intensité (4), en amont de la partie du trajet de courant de forte intensité (4) qui est formée par l'étrier (6), et un second contact de commande (11F) est raccordé, en aval de la partie du trajet de courant de forte intensité (4) qui est formée par l'étrier (6), au trajet de courant de forte intensité,
un contacteur (21) est raccordé à la source de tension (20) entre au moins l'un des premier et second contacts de commande (11E, 11F) et l'élément de coupure de courant de forte intensité irréversible (2) commandé par courant d'amorçage de telle sorte que, lorsqu'aucune tension de commande de la source de tension (20) n'est appliquée à l'enroulement (22) et au contacteur (21) et que l'étrier (6) ne fait pas partie du trajet de courant de forte intensité (4), une tension de circuit ouvert appliquée entre les premier et second contacts de commande (11E, 11F) ne provoque pas la transmission du courant d'amorçage à l'élément de coupure de courant de forte intensité irréversible (2) commandé par courant d'amorçage, et
l'unité de détection de surintensité de courant (1) est conçue de telle sorte que, lorsque la surintensité de courant circule dans le trajet de courant de forte intensité (4), l'étrier (6) se déplace dans la direction de la force de maintien de l'élément de maintien (5C) en s'éloignant de la partie du trajet de courant de forte intensité (4) qui n'est pas formée par l'étrier, malgré la tension de commande de la source de tension (20) appliquée à l'enroulement (22) et au contacteur (21) de telle sorte qu'un arc électrique (14) se forme en au moins un point de contact de courant de forte intensité entre l'étrier (6) et la partie du trajet de courant de forte intensité (4) qui n'est pas formée par l'étrier, lequel possède une résistance qui provoque une chute de tension aux bornes des premier et second contacts de commande (11E, 11F), dans lequel la tension et la résistance provoquent la transmission du courant d'amorçage à l'élément de coupure de courant de forte intensité irréversible (2) commandé par courant d'amorçage.

5. Dispositif de protection contre les surintensités de courant CC (100) selon l'une des revendications 1, 2 et 4,
dans lequel l'élément de maintien (5, 5A, 5B, 5C) est conçu sous la forme d'un ressort.

6. Dispositif de protection contre les surintensités de courant CC (100) selon l'une des revendications précédentes, dans lequel le dispositif de protection contre les surintensités de courant CC (100) est intégré dans un boîtier.

7. Véhicule, de préférence véhicule électrique ou hybride, équipé d'un dispositif de protection contre les surintensités de courant CC (100) selon l'une des revendications précédentes, dans lequel le dispositif de protection contre les surintensités de courant CC (100) est intégré dans un réseau de bord à haute tension du véhicule.
